# EUROPEAN PATENT APPLICATION

(11) **EP 4 715 925 A1**
(43) Date of publication of application: **25.03.2026**
(21) Application number: 25809922.5
(22) Date of filing: 03.04.2025
(51) Int. Cl.: H01M 10/04, H01M 4/66, H01M 10/0566, H01M 10/0565, H01M 10/058

(54) **BIPOLAR UNIT CELL AND BIPOLAR BATTERY COMPRISING SAME**

(30) Priority: 07.05.2024 KR 20240059696
(71) Applicant: LG Energy Solution, Ltd., Seoul 07335 (KR)
(72) Inventor: HWANG, Sunwook, Daejeon 34122 (KR); RYU, Jihoon, Daejeon 34122 (KR); KIM, Dong Kyu, Daejeon 34122 (KR); KIM, Hyosik, Daejeon 34122 (KR)
(74) Representative: BCKIP Part mbB
(86) International application number: PCT/KR2025/004412
(87) International publication number: WO 2025/234605

(57) **Abstract**

According to an embodiments of the present disclosure, provided is a bipolar unit cell comprising:
a laminate which includes a positive electrode current collector, a positive electrode material layer formed on one surface of the positive electrode current collector, a negative electrode current collector, a negative electrode material layer formed on one surface of the negative electrode current collector, and a separator, and in which the positive electrode material layer and the negative electrode material layer are stacked so as to face each other while interposing a separator between them, and
a sealing portion that is attached form the other surface of the positive current collector to the other surface of the negative current collector to integrally form the laminate and seal the inside,
wherein a conductive layer is formed on the outside of at least one of the positive electrode current collector and the negative electrode current collector, and a bipolar battery having a structure in which two or more of the bipolar unit cells are stacked.

## Description

### [TECHNICAL FIELD]

### Cross-Reference to Related Application(s)

This application claims priority to and the benefit of Korean Patent Application no. KR10-2024-0059696, filed on May 7, 2024, the entire contents of which are incorporated herein by reference.

The present disclosure relates to a bipolar unit cell, and a bipolar battery comprising the same.

### [BACKGROUND ART]

Recently, there has been a rising demand for high-capacity, high-output, and high-stability secondary batteries as an application area of lithium secondary batteries has rapidly expanded to power storage supply of large-area devices, such as automobiles and power storage devices, as well as power supply of electronic devices such as electrical, electronic, communication, and computer devices.

Electrodes used in such secondary batteries can be classified into monopolar electrodes in which active materials having the same polarity are coated on both surfaces of the current collector, and bipolar electrodes in which active materials having different polarities are coated on both surfaces of the current collector.

Secondary batteries using a monopolar electrode have a connection portion for connecting electrodes, so that the output may be reduced due to the electrical resistance of the connection portion. Secondary batteries using bipolar electrodes are used by stacking electrodes without such a connection portion, so the connection resistance of the electrodes can be minimized.

Despite these advantages, secondary batteries of bipolar electrodes have difficulty in increasing their capacity. Conventionally, bipolar electrodes were mainly formed by coating a positive active material and a negative electrode active material on both surfaces of the current collector, with a stainless steel current collector interposed between them, and the electrolyte solution was formed in a structure isolated on both sides of the current collector as a center.

However, when stainless steel foil is repeatedly used as the current collector, there is a durability problem, and a positive electrode active material and a negative electrode active material containing different materials from each other are formed on both surfaces of the current collector. Therefore, despite that the flexibility thereof is different and the required conditions or the like are different, not only there is a limitation in regulating them.

Therefore, when bipolar batteries using a bipolar electrode includes an electrolyte, particularly a liquid electrolyte or a gel electrolyte, it is very important to prevent leakage of the electrolyte. In general, a gasket is used for sealing a bipolar battery, but it is difficult to manufacture the gasket in a thickness of less than 1 mm. If the thickness of the gasket is too large, there is a problem that the empty space increases between the bipolar electrodes, and thus the ratio of the output to volume drops.

Therefore, there is a need to develop a bipolar battery that can ensure the safety in battery and improve its performance while solving the above problems.

### [DETAILED DESCRIPTION OF THE INVENTION]

### [Technical Problem]

It is an object of the present disclosure to provide a bipolar unit cell and a bipolar battery that not only effectively prevents leakage of the electrolyte in a bipolar battery and fills the space between bipolar electrodes to thereby prevent warpage of the electrode, but also has excellent battery performance such as life characteristics while ensuring the safety of a bipolar battery due to battery warpage prevention and uniform current transmission.

### [Technical Solution]

According to an aspect of the present disclosure, there is provided a bipolar unit cell comprising:
a laminate which includes a positive electrode current collector, a positive electrode material layer formed on one surface of the positive electrode current collector, a negative electrode current collector, a negative electrode material layer formed on one surface of the negative electrode current collector, and a separator, and in which the positive electrode material layer and the negative electrode material layer are stacked so as to face each other while interposing a separator between them, and
a sealing portion that is attached from the other surface of the positive electrode current collector to the other surface of the negative electrode current collector to integrally form the laminate and seal the inside,
wherein a liquid electrolyte or a gel electrolyte is contained in an internal space formed by the sealing portion, and
wherein a conductive layer is formed on the outside of at least one of the positive electrode current collector and the negative electrode current collector.

The conductive layer may have a thickness corresponding to the thickness in the stacking direction of the sealing portion attached to the respective other surfaces of the positive electrode current collector and the negative electrode current collector.

Further, the conductive layer may be formed with an area of 90% to 100% relative to the area excluding the area where the sealing portion is formed, from the other surface of the positive electrode current collector or the negative electrode current collector.

The conductive layer may be a conductive tape or a conductive sealant, and specifically, it may comprise copper or carbon.

The conductive layer may further comprise an adhesive material. In this case, the adhesive material may comprise at least one selected from the group consisting of an acrylic resin, a phenolic resin, a xylene resin, a styrene-based resin, an epoxy compound, a urethane-based resin, a vinyl-based resin, and a synthetic rubber.

The conductive layer may have an electronic conductivity of 10⁻¹⁰ S/m to 10⁻⁷ S/m.

Meanwhile, the sealing portion may be a sealing tape or a curable sealant.

The positive electrode current collector may be an Al current collector, and the negative electrode current collector may be a Cu current collector.

According to another aspect of the present disclosure, there is provided a bipolar battery comprising two or more of the bipolar unit cells,
wherein the bipolar unit cells are stacked so that the current collectors having different polarities face each other, the bipolar battery has a separation space in the stacking direction by a sealing portion formed on the outer edge portion of the bipolar unit cells, and a conductive layer is located in the separation space.

Wherein, the conductive layer may have a thickness corresponding to the distance in the stacking direction of the separation space.

### [BRIEF DESCRIPTION OF THE DRAWINGS]

FIG. 1 shows a cross-sectional schematic diagram of a bipolar unit cell according to an embodiment of the present disclosure.
FIG. 2 is a top view of the positive electrode side of the bipolar unit cell of FIG. 1.
FIG. 3 shows a cross-sectional schematic diagram of a bipolar battery according to an embodiment of the present disclosure.
FIG. 4 shows a life characteristic graph according to Experimental Example 1.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Throughout the descriptions herein, when a certain part "includes" a component, this does not indicate that the certain part excludes other components, but indicates that the part may further include other components, unless otherwise defined.

Throughout the descriptions herein, the "average particle size D50" means a particle size at which cumulative volumes of powder particles (e.g., positive electrode active material, negative electrode active material, etc.) reach 50% in the particle size distribution curve of the particles. The average particle size D50 can be measured using a laser diffraction method. For example, the D50 can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution graph, and then determining the particle size (diameter) corresponding to 50% of cumulative volume.

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein. In the specification and drawings, the same or similar components throughout the description will be denoted with the same reference numerals.

### Bipolar unit cell

According to an embodiment of the present disclosure, a bipolar unit cell is provided.

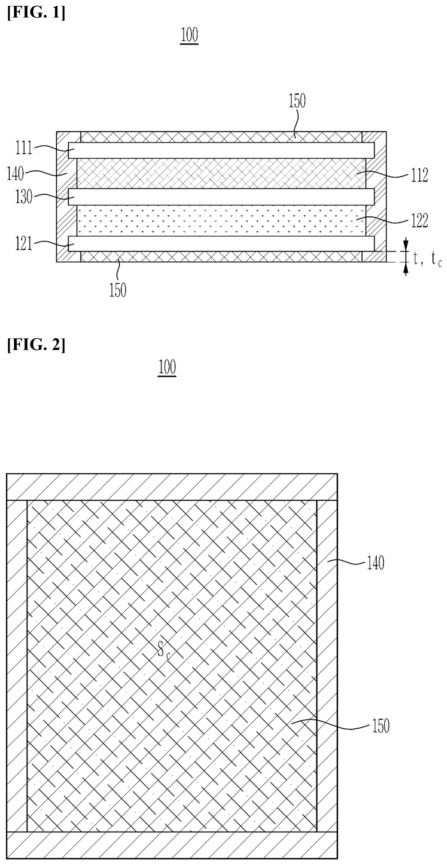

FIG. 1 shows a cross-sectional schematic diagram of a bipolar unit cell 100 according to an embodiment of the present disclosure, and FIG. 2 is a top view of the positive electrode side of the bipolar unit cell 100.

Referring to FIG. 1, a bipolar unit cell 100 consists of a structure which comprises: a positive electrode current collector 111, a positive electrode material layer 112 formed on one surface of the positive electrode current collector 111, a negative electrode current collector 121, a negative electrode material layer 122 formed on one surface of the negative electrode current collector 121, and a separator 130, and in which the positive electrode material layer 112 and the negative electrode material layer 122 are stacked so as to face each other while interposing a separator 130 between them.

The positive electrode current collector 111 is not particularly limited so long as it has high conductivity without causing a chemical change in the corresponding battery. For example, the current collector used herein may include stainless steel, aluminum, nickel, titanium, baked carbon, or a material formed by surface-treating a surface of aluminum or stainless steel with carbon, nickel, titanium, silver, or the like, but specifically, it may be an Al current collector. Here, the Al current collector may be made of Al, wherein it is a concept of further including other metal materials to the extent of impurity content.

The positive electrode current collector 111 may have a thickness of 3 *µ*m to 500 *µ*m, and fine protrusions and depressions may be formed on the surface of the positive electrode current collector, thereby reinforcing the binding strength of the positive electrode material layer. For example, the positive electrode current collector may be used in various forms such as a film, a sheet, a foil, a net, a porous body, a foam body, a nonwoven fabric, etc.

The positive electrode material layer 112 may include a positive electrode active material, a binder, and further a conductive material.

The positive electrode active material is a compound capable of reversible intercalation and deintercalation of lithium, and various combinations are possible. Examples thereof may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where, 0 < Z < 2), etc.), lithium-nickel-cobalt-based oxide (e.g., LiNi_{1-Y1}Co_{Y1}O₂ (where, 0<Y1<1), etc.), lithium-manganese-cobalt-based oxide (e.g., LiCo_{1-Y2}Mn_{Y2}O₂ (where, 0<Y2<1), LiMn_{2-Z1}Co_{Z1}O₄ (where, 0 < Z1 < 2), etc.), lithium-nickel-manganese-cobalt-based oxide (e.g., Li(NiₚCo_{q}Mnᵣ)O₂ (where, 0 < p < 1, 0 < q < 1, 0 < r < 1, p+q+r=1) or Li(Niₚ₁Co_{q1}Mnᵣ₁)O₄ (where, 0 < p1 < 2, 0 < q1 < 2, 0 < r1 < 2, p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2 and s2 are atomic fractions of each independent elements, wherein 0 < p2 < 1, 0 < q2 < 1, 0 < r2 < 1, 0 < s2 < 1, p2+q2+r2+s2=1), etc.), lithium iron phosphate (e.g., Li₁₊ₐ₁Fe₁₋ₓMₓ₁(PO_{4-b1})X_{b1} (where M is at least one selected from Al, Mg and Ti, X is at least one selected from F, S and N, and - 0.5≤a1≤0.5, 0≤x1≤0.5, 0≤b1≤0.1), and any one thereof or a compound of two or more thereof may be included.

Specifically, the positive electrode active material may include a lithium transition metal oxide represented by the following Formula 1, and particularly 0.5≤x≤0.7, 0≤b≤0.1, and more particularly, it may include LiNi_{0.6}Co_{0.1}Mn_{0.3}O₂.

[Formula 1] Li₁₊ₐNiₓM₁₋ₓO_{2-b}X_{b}

wherein, in Formula 1, M is at least one element selected from the group consisting of Mn, Co, Al, Fe, V, Cr, Ti, Ta, Mg and Mo, X is at least one element selected from F, S, and N, and 0≤a≤0.5, 0.3≤x<0.8, 0≤b≤0.1.

Alternatively, it may be lithium iron phosphate.

The binder is a component that assists in the binding between the conductive material, the positive electrode active material, and the positive electrode current collector. Examples of such a binder include polyvinylidene fluoride (PVDF), polyvinyl alcohol, carboxymethyl cellulose (CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, and the like.

Typically, the binder may be included in an amount of 0.5 to 20 wt.%, particularly 0.5 to 10 wt.%, and more particularly 0.5 to 5 wt.%, based on the total weight of the positive electrode material layer 112.

The conductive material is a component for further improving the conductivity of the positive electrode active material. Such a conductive material is not particularly limited as long as it has conductivity without causing any chemical change in the corresponding battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be included in an amount of 0.1 to 20 wt.%, particularly 0.5 to 10 wt.%, and more particularly 0.5 to 5 wt.%, based on the total weight of the positive electrode material layer 112.

In addition, other additives may further include, for example, a filler or the like as a component for inhibiting the expansion. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

The negative electrode current collector 121 is not particularly limited so long as the negative electrode current collector has high conductivity without causing a chemical change in the battery. For example, copper, stainless steel, nickel, titanium, baked carbon, or a material formed by surface-treating a surface of copper or stainless steel with carbon, nickel, titanium, silver, or the like, or aluminum-cadmium alloys, or the like may be used. Specifically, it may be a Cu current collector, wherein the Cu current collector may be made of Cu, which is a concept of further including other metal materials at approximately impurity content level.

The negative electrode current collector 121 may generally have a thickness of 3 *µ*m to 500 *µ*m. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foam, and a non-woven fabric structure.

The negative electrode material layer 122 may include a negative electrode active material, a binder, a conductive material, and other additives as described above.

The negative active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; metals such as Al, Cu, Ge, Si, Sn, etc.; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The separator 130 can be used without particular limitation as long as it is typically used as a separator in a secondary battery, and particularly, a separator having excellent moisture-retention ability for an electrolyte as well as low resistance to the movement of electrolyte ions may be preferably used.

For example, the separator 130 used herein may include a porous polymer film including a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof. Also, a typical porous nonwoven fabric, for example, a nonwoven fabric formed of high melting point glass fibers or polyethylene terephthalate fibers may be used as the separator.

Alternatively, the separator may be a safety reinforced separator (SRS) in which a coating layer containing binding materials and inorganic particles is formed on one surface or both surfaces of the polymer substrate as described above. The polyolefin substrate of the SRS used herein may be the separator materials described above, and the coating layer includes an inorganic particle and a binding material.

Here, the inorganic particle makes it possible to form an empty space between inorganic particles, and plays a role to form a fine porosity and also serves as a spacer capable of maintaining a physical form. Further, the inorganic particle has a feature of not having a physical property changed even at a high temperature of 200°C or higher, and thus the organic-inorganic mixed layer formed comes to have an excellent thermal resistance.

The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable. Further, if the inorganic particle has a high density, it is difficult to disperse such particles during manufacturing and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. If such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (H_{f}O₂), a mixture thereof or the like, but are not limited thereto.

The inorganic particle having the lithium ion transfer capacity refers to an inorganic particle which has a function of containing a lithium element, but not storing lithium to move a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, etc.; lithium germanium thiophosphate (LiₓGe_{y}P_{z}S_{w}, 0<x<4, 0<y<1, 0<z<1, 0<w<5) such as lithium lanthanum titanate (LiₓLa_{y}TiO₃, 0<x<2, 0<y<3), Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina (Al₂O₃), silicon carbide (SiC), and beryllium oxide (BeO), but are not limited thereto.

In case of using the above-described high dielectric inorganic particle, the inorganic particle having piezoelectricity, the thermal conductive inorganic particle and the inorganic particle having the lithium ion transfer capacity together, a synergy effect thereof may be doubled.

A size of the inorganic particle is not limited, but it is preferable that the size thereof is in a range of 0.001 to 10 *µ*m, if possible, in order to form an appropriate porosity between the inorganic particles. If such size is less than 0.001 *µ*m, dispersibility is deteriorated and thus it becomes difficult to control a physical property. If such size is more than 10 *µ*m, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99 wt.%, more preferably in a range of 10 to 95 wt.% per 100 wt.% of a mixture of an inorganic particle and a binding material. If the content thereof is less than 1 wt.%, the content of binding material becomes excessively large to decrease a pore size and a porosity due to a decrease in empty space formed between inorganic particles, and thus mobility of lithium ion may be deteriorated. In contrast, if the content thereof is more than 99 wt.%, the content of binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having an excellent degree of swelling with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 MPa^{1/2} more preferably in a range of 15 to 25 MPa^{1/2} and 30 to 45 MPa^{1/2}. If the solubility index is less than 15 MPa^{1/2} and more than 45 MPa^{1/2}, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separator 130 may be 5 micrometers to 20 micrometers, particularly 5 micrometers to 15 micrometers, more particularly 6 micrometers to 13 micrometers.

Meanwhile, referring to FIGS. 1 and 2 together, in order to more effectively prevent leakage of the electrolyte impregnated into the components, each bipolar unit cell 100 has a form in which a sealing portion 140 connected and attached from the other surface of the positive electrode current collector 111 to the other surface of the negative electrode current collector 121 to integrally form the components and seal the inside wraps around the edges of the positive electrode current collector 111 and the negative electrode current collector 121.

Further, in this case, when the sealing portion 140 and the positive and the negative current collectors 111, 121 are formed on the outside from the other surface in this manner, there is no need to reduce the area of the positive electrode material layer 112 and the negative electrode material layer 122 or reduce the volume by the sealing portion 140. Therefore, it is more excellent in terms of battery capacity, and a sealing layer does not need to be formed inside, but formed on the outer surface after lamination, so that the process efficiency is excellent.

Such a sealing portion 140 may be a sealing tape or a curable sealant, however, since the sealing portion must be adhered and sealed on the outer surface of the positive electrode current collector 111 and the negative electrode current collector 121, it may be a sealing tape. In this case, the sealing tape is not limited as long as it is made of a material having good chemical resistance and strong adhesive strength. For example, the sealing tape may be made of a material selected from the group consisting of polyimide (PI), polyvinyl chloride (PVC), polyethylene (PE), polypropylene (PP), and polyethylene terephthalate (PET). Further, the curable sealant may be made of a material selected from the group consisting of an acrylic resin, a phenolic resin, a xylene resin, a styrene-based resin, an epoxy compound, a urethane-based resin, a vinyl-based resin, and a synthetic rubber. The curable sealant may be cured by light or heat.

In the internal space formed by such a seal portion 140, the components are impregnated with a liquid electrolyte or a gel electrolyte. The injection or impregnation of the impregnated liquid electrolyte or gel electrolyte may be performed before sealing or during the sealing process, and are not limited thereto.

The liquid electrolyte includes a lithium salt and a non-aqueous organic solvent.

The lithium salt can be used similarly as that used in lithium secondary batteries. The lithium salt is used as a medium for transferring ions within a lithium secondary battery. For example, the lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻, as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more of them. However, in terms of excellent stability, it is preferable to include Li(N(SO₂CF₃)₂.

Although the concentration of the lithium salt may be appropriately changed within a generally applicable range, the lithium salt may be included at a concentration of 0.5 M to 3 M, particularly at a concentration of 1 M to 2.5 M, and more particularly at a concentration of 1 M to 2 M in the electrolyte in order to obtain an optimal effect of forming a film for preventing corrosion on the electrode surface. When the concentration of the lithium salt satisfies the above range, the effect of improving the cycle characteristics during high-temperature storage of the battery is sufficient, and the viscosity of the electrolyte is appropriate, thereby capable of improving electrolyte impregnation property.

The non-aqueous organic solvent is not limited as long as it can minimize decomposition due to an oxidation reaction or the like during the charge/discharge process of the bipolar battery, and can exhibit its properties together with an additive. For example, a carbonate-based organic solvent, an ether-based organic solvent, an ester-based organic solvent, and the like may be used alone or in mixture of two or more thereof, and specifically, a carbonate-based organic solvent may be used.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include at least one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the electrolyte may further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and particularly 1 wt.% to 5 wt.% based on the total weight of the electrolyte. When the amount of the sultone-based compound in the electrolyte is more than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the gel electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the electrolyte.

Further, the halogen-substituted carbonate-based compound may include fluoroethylene carbonate(FEC), and may be included in an amount of 5 wt.% or less based on the total weight of the electrolyte. When the amount of the halogen-substituted carbonate-based compound in the electrolyte is more than 5 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. When the content of the cyclic carbonate-based compound in the gel electrolyte is more than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 3 wt.% or less based on the total weight of the gel electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3 wt.% or less based on the total weight of the electrolyte.

Two or more kinds of the functional additives may be mixed, and included in an amount of 20 wt.% or less, particularly 0.1 wt.% to 10 wt.%, based on the total weight of the gel electrolyte. When the content of the functional additive is more than 20 wt.%, there is a possibility that excessive side reactions in the electrolyte may occur during charge and discharge of the battery. In particular, it is not sufficiently decomposed at high temperatures, and may exist as an unreacted material or in a precipitated state in an electrolyte at room temperature. Thereby, side reactions may occur in which the lifetime or resistance characteristics of the battery are reduced.

The gel electrolyte may comprise, in addition to the lithium salt and the non-aqueous organic solvent, at least one polymerizable compound selected from the group consisting of a polymerizable monomer, oligomer, or copolymer having a polymerizable unsaturated functional group, wherein at least a part of the polymerizable unsaturated functional group may be cured.

The polymerizable compound of the polymerizable monomer, oligomer or copolymer is a material having a polymerizable unsaturated functional group, for example, a compound which has a polymerizable unsaturated functional group selected from the group consisting of vinyl, epoxy, allyl and (meth)acryl groups, and can be converted into a gel type through polymerization or crosslinking. The polymerizable compound is not particularly limited, as long as it is used conventionally as a monomer, oligomer or polymer for preparing a gel electrolyte.

More specifically, non-limiting examples of the polymerizable monomer or oligomer include tetraethylene glycoldiacrylate, polyethylene glycol diacrylate (molecular weight 50~20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxy octane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in mixture of two or more thereof.

In addition, as a representative example, the copolymer include at least one copolymer selected from the group consisting of allyl 1,1,2,2-tetrafluoroethyl ether (TFE)-(2,2,2-trifluoroethyl acrylate) polymer, TFE-vinyl acetate, TFE-(2-vinyl-1,3-dioxolane) polymer, TFE-vinyl methacrylate polymer, TFE-acrylonitrile polymer, TFE-vinyl acrylate polymer, TFE-methyl acrylate polymer, TFE-methyl methacrylate(MMA) polymer and TFE-2,2,2-trifluoroethyl acrylate(FA) polymer.

The polymer formed through the curing of the above materials may be included in an amount of 0.01 wt.% to 10 wt.% based on the total weight of the gel-type electrolyte. When the content of the polymer is more than 10 wt.%, the amount of the polymerizable material increases during the preparation of the gel-type electrolyte, so that gelation occurs too quickly or is formed too densely, resulting in a disadvantage in that a gel with high resistance is obtained. On the contrary, when the content is less than 0.01 wt.%, the effect due to gelation cannot be obtained, which is not preferable.

Meanwhile, the gel-type electrolyte of the present disclosure may further include a polymerization initiator for polymerization of the polymerizable unsaturated functional group, and a conventional thermal polymerization initiator or photopolymerization initiator known in the art may be used. For example, the initiator may be decomposed by heat to form radicals, and react with the polymerizable monomer, oligomer, or polymer through free radical polymerization to form a gel-type electrolyte.

More particularly, examples of the polymerization initiator include organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(iso-butyronitrile) (AIBN) and 2,2'-azobisdimethyl valeronitrile (AMVN), or the like, but are not limited thereto.

The polymerization initiator is decomposed by heat including by way of non-limiting example, heat of 30°C to 100°C, or decomposed at room temperature (5°C to 30°C) to form radicals in a bipolar unit cell, and the polymerizable unsaturated functional group of a polymerizable monomer, oligomer, or polymer can react by free radical polymerization to form a gel-type electrolyte.

The polymerization initiator may be included in an amount of 0.01 to 20 parts by weight, particularly 0.01 to 1 parts by weight, based on 100 parts by weight of the polymerizable compound.

When the polymerization initiator is included within a range of 0.01 to 20 parts by weight, it is possible to increase the gel conversion rate so that gel-type electrolyte properties may be ensured, and to prevent a pre-gelation reaction so that the wettability of an electrode with an electrolyte may be improved.

Meanwhile, a conductive layer 150 is formed on the outside of at least one of the positive electrode current collector 111 and the negative electrode current collector 121.

Since the sealing portion 140 is formed on the other surface of the positive electrode current collector 111 and the other surface of the negative electrode current collector 121, it is formed on the outer surface of the bipolar unit cell 100.

In this case, when a plurality of bipolar unit cells 100 are stacked, a separation space is formed between respective bipolar unit cells 100 by the sealing portion 140.

However, when such a separation space is formed, there is a problem that the contact between the electrodes of the adjacent bipolar unit cells 100 is not well carried out, so that the current does not flow uniformly and the electrolyte storage properties may also be reduced. Furthermore, not only the pressure is not applied uniformly when pressurized due to the separation space, but the warpage of electrode may occur due to the expansion and contraction of the electrode during charge and discharge of the bipolar battery, which may also cause warpage of the entire bipolar battery, resulting in problems such as the reduction of safety.

Thus, in order to fill the separation space, a conductive layer 150 that has both electronic conductivity and adhesiveness is formed on the outer surface of the positive electrode current collector 111, the negative electrode current collector 121, or both of them.

This conductive layer 150 is intended to eliminate the separation space and prevent warpage of the electrode, and thus may have a thickness tc corresponding to the thickness t in the stacking direction of the sealing portion 140 attached to the respective other surfaces of the positive electrode current collector rand the negative electrode current collector.

That is, the thickness tc of the conductive layer 150 may be the same as the thickness t of the sealing portion 140, or may be formed to have a slight difference, if any, i.e., within 10%, more particularly within 5%, and even more particularly within 1% of the thickness t of the sealing portion 140.

That is, the conductive layer must be formed with almost the same thickness so that not only the electrode warpage prevention intended by the present disclosure but also a uniform current transmission effect can be achieved, thereby improving the battery performance.

In addition, in a similar sense, the formation area Sc of the conductive layer 150 may be formed with an area Sc of 80% to 100% of the area of the other surface of the positive electrode current collector 111 or negative electrode current collector 121 where the conductive layer 150 is formed, excluding the area where the sealing portion 140 is formed, and more specifically, may be formed with an area Sc of 90% to 100%.

Here, the conductive layer 150 may be a conductive tape or a conductive sealant. That is, it may be formed of a tape or formed of a sealant layer.

Here, the conductive tape may be a copper tape or a carbon tape containing copper or carbon, which is a material having conductivity.

Forming the conductive layer 150 in the form of a tape in this manner facilitates the process.

Further, the conductive sealant may include a conductive particle and an adhesive material.

In this case, the conductive particles are not limited and may be conductive particles, for example, materials such as carbon, metal, etc. Specifically, the conductive particles may be carbon, such as carbon black, carbon nanotubes, or graphene, or metals such as copper, aluminum, platinum, silver, titanium, or nickel. More specifically, the conductive particles may include copper particles or carbon particles.

Here, the average particle diameter D50 of the conductive particles may be 100 nm to 1000 *µ*m, and particularly, 10 *µ*m to 100 *µ*m.

If the average particle diameter is too large outside the above range, it is difficult to easily adjust the thickness of the conductive layer 150, and if the average particle diameter is too small, there is a problem that the electrically conductive pass becomes long.

Similar to the sealing portion, the adhesive material may include at least one selected from the group consisting of an acrylic resin, a phenolic resin, a xylene resin, a styrene-based resin, an epoxy compound, a urethane-based resin, a vinyl-based resin, and a synthetic rubber, and particularly, may be an acrylic resin.

The conductive layer 150 must enable even transmission of current between the positive electrode and the negative electrode as described above, and such transmission affects the bipolar battery performance. Thus, the electronic conductivity of the conductive layer 150 may be 10⁻¹⁰ S/m to 10⁻⁵ GS/m, particularly 10⁻¹⁰ S/m to 10⁻⁷ GS/m, and more particularly 10⁻¹⁰ S/m to 10⁻⁸ GS/m.

Having electronic conductivity in the above range is preferable in terms of battery performance. If the conductivity is lower than the above range, sufficient conductivity cannot be obtained, and it is not easy to manufacture a conductive layer having a conductivity higher than the above range.

### Bipolar battery

According to yet another embodiment of the present disclosure, a bipolar battery comprising two or more of the bipolar unit cells is provided.

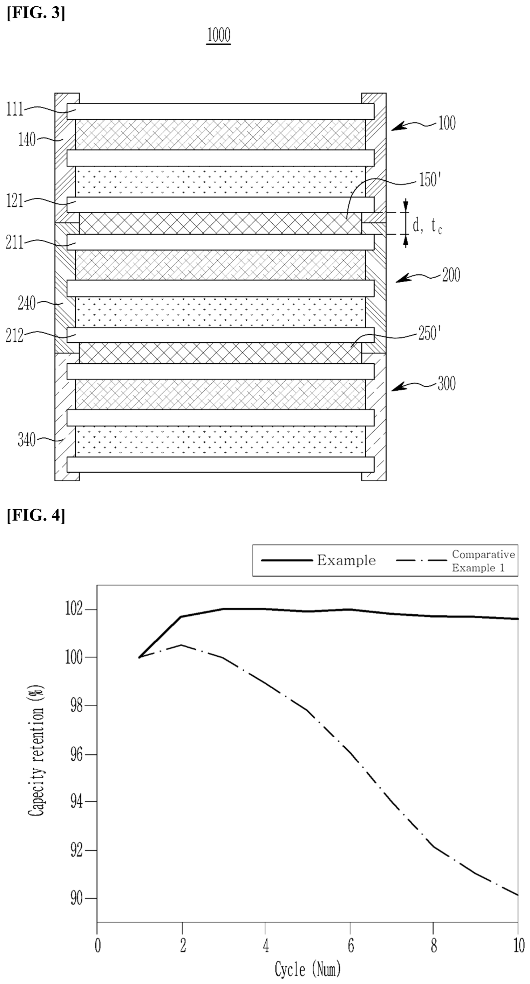

FIG. 3 shows a cross-sectional schematic diagram of such a bipolar battery 1000.

Referring to FIG. 3, the bipolar battery 1000 consists of a structure in which two or more bipolar unit cells 100, 200, 300 are stacked such that the positive electrode current collectors 111, 211, and the negative electrode current collector 121, 212 having different polarities face each other.

Specifically, the negative electrode current collector 121 of the bipolar unit cell 100 and the positive electrode current collector 211 of the bipolar unit cell 200 are stacked so as to face each other, and the bipolar unit cell 200 and the bipolar unit cell 300 are also stacked so that the current collectors having different polarities face each other. Therefore, the flow of current can be obtained by the contact of them, etc.

However, as pointed out in the description of the bipolar unit cell 100 of FIG. 1, the bipolar unit cells 100, 200, 300 according to the present disclosure may have sealing portions 140, 240, 340 formed on the outer side thereof, whereby the bipolar unit cells 100, 200, 300 have a separation space in the stacking direction by a distance of about twice the thickness of respective sealing portions 140, 240, 340.

Therefore, due to these separation spaces, the bipolar battery 1000 may experience electrode warpage during the charging and discharging process, which makes it difficult to evenly transmit current, current may be concentrated only in some areas, and resistance may increase. Thereby, the conductive layers 150', 250' may be formed in such separation spaces.

At this time, the conductive layers 150', 250' formed in the separation space may be formed in advance so as to correspond to the thickness of the sealing portion on the surface when manufacturing the respective bipolar unit cells 100, 200, 300, and may be in contact with them. Alternatively, when stacking the bipolar unit cells 100, 200, 300, they can be applied in various different ways, such as a form in which a conductive layer is filled in the separation space between them, or a form in which conductive layers 150', 250' are formed in a thickness of about 2 times that of the sealing portions 140, 240, 340 on the surfaces where the bipolar unit cells 100, 200, 300 are in contact with each other, and then stacked. The manufacturing method thereof is not limited as long as it is structured to form the conductive layer in the separation space between them.

In this case, the conductive layers 150', 250' may be formed in a thickness tc corresponding to the distance d in the stacking direction of the separation space.

At this time, the corresponding thickness may be the same as the distance d of the separation space of the conductive layer 150 as described above, or may be formed to have a slight difference, if any, i.e., a thickness difference of within 10%, particularly within 5%, and more particularly within 1% of the distance d of the separation space.

Meanwhile, although not shown in the figure, the bipolar battery 1000 manufactured in this manner may have a structure in which a positive electrode lead is connected to a positive electrode current collector located at the outermost part on one side among the stacked bipolar unit cells, and thus electrical leading to the outside becomes possible, and a negative lead is connected to a negative current collector located at the outermost part on the other side, and thus electrical leading to the outside becomes possible, thereby performing the charge and discharge by electrical connection.

Embodiments of the present disclosure will be described with reference to the following examples to demonstrate that the invention exhibits the intended improved effects.

### <Example 1>

LiFePO₄ as a positive electrode active material, carbon nanotubes as a conductive material, and PVDF as a binder were added into an NMP solvent in a weight ratio of 98:1:1 and dispersed to prepare a positive electrode slurry, which was then coated to a thickness of 100 micrometers on one surface of the Al metal thin film with leaving the edge portion, followed by drying and rolling to prepare a positive electrode.

A mixture of natural graphite and artificial graphite (weight ratio 50:50) as a negative electrode active material, carbon black as a conductive material, styrene-butadiene rubber(SBR) as a binder, and carboxymethyl cellulose(CMC) as a filler were added into a water solvent in a weight ratio of 96:1:2:1 and dispersed to prepare a negative electrode slurry, which was then coated to a thickness of 120 micrometers on one surface of the Cu metal thin film with leaving the edge portion, followed by drying and rolling to prepare a negative electrode.

A CCS separator (thickness: 13 micrometers) having an organic/inorganic mixed layer (Al₂O₃: PVdF = 95:5) formed on both surfaces of a polyolefin substrate was used as a separator.

Further, LiPF₆ was dissolved in a non-aqueous organic solvent having a composition of ethylene carbonate (EC) : ethyl methyl carbonate (EMC) = 30 : 70 (volume ratio), to a concentration of 1.0 M. Thereby, an electrolyte composition was prepared.

The electrolyte composition was impregnated into the positive electrode, the negative electrode, and the separator. At this time, application and release of the vacuum were performed 5 times, and then the excess electrolyte composition remaining on the surface was removed. The positive electrode impregnated with the electrolyte composition and the negative electrode impregnated with the electrolyte composition were laminated by interposing the separator impregnated with the electrolyte composition between them, and then pressurized. In order to seal them, a sealing tape (PI) was attached so as to be covered by the other surface of the negative electrode from the other surface of the positive electrode. Two unit cells manufactured in this way were prepared, and then they were stacked so that the other surface of the Cu metal thin film of the negative electrode of one unit cell faces the other surface of the Al metal thin film of the positive electrode of the other unit cell, and a conductive adhesive (carbon sealant) was filled into the separation space formed between them to manufacture a semi-solid bipolar cell.

### <Comparative Example 1>

A semi-solid bipolar cell was manufactured in the same manner as in Example 1, except that in Example 1, no conductive adhesive was filled between the two unit cells.

### <Experimental Example 1>

The semi-solid bipolar cells manufactured in Example 1 and Comparative Example 1 were charged at 0.02C (1.22mA), 6.4V cut-off, subjected to formation and degassing, and then CC-CV charge and discharge were performed 10 times at 0.1C(6.1mA) and 5V-7.2V. The capacity retention rate was confirmed accordingly.

The capacity retention rate was calculated as the ratio of the discharge capacity in each cycle to the first discharge capacity after formation, and the results are shown in FIG. 4 below.

Referring to FIG. 4, it can be confirmed that the capacity retention rate of Comparative Example 1 is significantly lowered compared to Example 1, and that the capacity retention rate of Example 1 is well maintained.

Based on the above disclosure, it will be understood by those of ordinary skill in the art that various applications and modifications can be made within the scope and spirit of the present disclosure.

### [INDUSTRIAL APPLICABILITY]

The bipolar unit cell and bipolar battery according to the present disclosure have a structure in which the positive electrode active material is formed and bonded to the positive electrode current collector, and the negative electrode active material is formed and bonded to the negative electrode current collector, and thus satisfy the required conditions, compared to the conventional ones formed on both surfaces of a single current collector.

In addition, a sealing portion is formed for each bipolar unit cell composed of the positive electrode, the negative electrode and a separator interposed between them, and they are joined at the outer surface thereof to completely seal the inside. Thus, compared to the case where a gasket is installed, it not only effectively prevents leakage of the electrolyte, but also prevents loss of the positive electrode active material and the negative electrode active material, and has the effect of increasing capacity.

Furthermore, a separation space is formed between the bipolar unit cells on the outer surface of the bipolar unit cells formed by the sealing portion, which was filled with a conductive layer, whereby electrode warpage and battery warpage caused by the separation space can be prevented, and uniform pressure can be applied during pressurization, and even current transmission between the electrodes is possible due to overall contact. Therefore the present disclosure not only increases the safety of the bipolar battery, but also has the effect of improving battery performance such as life characteristics.

## Claims

1. A bipolar unit cell comprising:
a laminate which includes a positive electrode current collector, a positive electrode material layer formed on one surface of the positive electrode current collector, a negative electrode current collector, a negative electrode material layer formed on one surface of the negative electrode current collector, and a separator, and in which the positive electrode material layer and the negative electrode material layer are stacked so as to face each other while interposing the separator between them, and
a sealing portion that is attached from the other surface of the positive electrode current collector to the other surface of the negative electrode current collector to integrally form the laminate and seal the inside,
wherein a liquid electrolyte or a gel electrolyte is contained in an internal space formed by the sealing portion, and
wherein a conductive layer is formed on the outside of at least one of the positive electrode current collector and the negative electrode current collector.

2. The bipolar unit cell according to claim 1,
wherein the conductive layer has a thickness corresponding to the thickness in the stacking direction of the sealing portion attached to the respective other surfaces of the positive electrode current collector and the negative electrode current collector.

3. The bipolar unit cell according to claim 1,
wherein the conductive layer is formed with an area of 90% to 100% relative to the area excluding the area where the sealing portion is formed, from the other surface of the positive electrode current collector or the negative electrode current collector.

4. The bipolar unit cell according to claim 1,
wherein the conductive layer is a conductive tape or a conductive sealant.

5. The bipolar unit cell according to claim 1,
wherein the conductive layer comprises copper or carbon.

6. The bipolar unit cell according to claim 1,
wherein the conductive layer further comprises an adhesive material.

7. The bipolar unit cell according to claim 6,
wherein the adhesive material comprises at least one selected from the group consisting of an acrylic resin, a phenolic resin, a xylene resin, a styrene-based resin, an epoxy compound, a urethane-based resin, a vinyl-based resin, and a synthetic rubber.

8. The bipolar unit cell according to claim 1,
wherein the conductive layer has an electronic conductivity of 10⁻¹⁰ S/m to 10⁻⁷ S/m.

9. The bipolar unit cell according to claim 1,
wherein the sealing portion is a sealing tape or a curable sealant.

10. The bipolar unit cell according to claim 1,
wherein the positive electrode current collector is an Al current collector, and the negative electrode current collector is a Cu current collector.

11. A bipolar battery comprising two or more bipolar unit cells according to claim 1,
wherein the bipolar unit cells are stacked so that the current collectors having different polarities face each other,
wherein the bipolar battery has a separation space in the stacking direction by a sealing portion formed on the outer edge portion of the bipolar unit cells, and
wherein a conductive layer is located in the separation space.

12. The bipolar battery according to claim 11,
wherein the conductive layer has a thickness corresponding to the distance in the stacking direction of the separation space.
